# EUROPÄISCHE PATENTANMELDUNG

(11) **EP 3 451 255 A1**
(43) Veröffentlichungstag der Anmeldung: **06.03.2019**
(21) Anmeldenummer: 17188837.3
(22) Anmeldetag: 31.08.2017
(51) Int. Cl.: G06Q 10/08, G06Q 50/02, G10L 15/26

(54) **VERFAHREN ZUM DOKUMENTIEREN MINDESTENS EINER INFORMATION ÜBER MINDESTENS EINEN BAUM UND/ODER EINE UMGEBUNG DES BAUMS UND DOKUMENTATIONSSYSTEM**

(71) Anmelder: Andreas Stihl AG & Co. KG, 71336 Waiblingen (DE)
(72) Erfinder: Biedermann, Marius, 72379 Hechingen (DE); Frey, Benjamin, 73663 Berglen (DE); Hollmeier, Friedrich, 73635, Rudersberg (DE)
(74) Vertreter: Patentanwälte Ruff, Wilhelm, Beier, Dauster & Partner mbB

(57) **Zusammenfassung**

Verfahren zum Dokumentieren mindestens einer Information (Info) über mindestens einen Baum (101) und/oder eine Umgebung (110) des Baums (101), wobei das Verfahren die Schritte aufweist:
a) Erfassen einer Spracheingabe (SE) aufweisend die mindestens eine Information (Info) über den Baum (101) und/oder die Umgebung (110) des Baums (101) mit mindestens einem Forstbegriff (FB),
b) Erfassen einer Position (PO) des Baums (101) und/oder der Umgebung (110) mit der Spracheingabe (SE),
c) Erkennen des Forstbegriffs (FB) in der erfassten Spracheingabe (SE),
d) Zuordnen der Information (Info) in der erfassten Spracheneingabe (SE) einer von mindestens zwei Informationskategorien (IK) basierend auf dem erkannten Forstbegriff (FB) und
e) Speichern der kategorisierten Information (Info) mit der erfassten Position (PO).

## Beschreibung

### ANWENDUNGSGEBIET UND STAND DER TECHNIK

Die Erfindung bezieht sich auf ein Verfahren zum Dokumentieren mindestens einer Information über mindestens einen Baum und/oder eine Umgebung des Baums und ein Dokumentationssystem zum Dokumentieren mindestens einer Information über mindestens einen Baum und/oder eine Umgebung des Baums.

Ein Verfahren zum Dokumentieren mindestens einer Information über mindestens einen Baum und/oder eine Umgebung des Baums und ein Dokumentationssystem zum Dokumentieren mindestens einer Information über mindestens einen Baum und/oder eine Umgebung des Baums sind bekannt.

### AUFGABE UND LÖSUNG

Der Erfindung liegt als Aufgabe die Bereitstellung eines Verfahrens zum Dokumentieren mindestens einer Information über mindestens einen Baum und/oder eine Umgebung des Baums und eines Dokumentationssystems zum Dokumentieren mindestens einer Information über mindestens einen Baum und/oder eine Umgebung des Baums zugrunde, das jeweils das Dokumentieren erleichtert, insbesondere benutzerfreundlich ist, und ein einfaches Nutzen des Dokumentierten ermöglicht.

Die Erfindung löst diese Aufgabe durch die Bereitstellung eines Verfahrens mit den Merkmalen des Anspruchs 1. Des Weiteren wird die der Erfindung zugrundeliegende Aufgabe durch ein Dokumentationssystem mit den Merkmalen des Anspruchs 9 gelöst. Vorteilhafte Weiterbildungen und/oder Ausgestaltungen der Erfindung sind in den abhängigen Ansprüchen beschrieben.

Das erfindungsgemäße, insbesondere automatische, Verfahren zum Dokumentieren mindestens einer Information über mindestens einen Baum, insbesondere seinen Baumstamm, und/oder eine Umgebung, insbesondere ein Umgebungsobjekt, des Baums weist die Schritte auf: a) Erfassen, insbesondere automatisches Erfassen, einer Spracheingabe aufweisend die mindestens eine Information über den Baum und/oder die Umgebung des Baums mit mindestens einem, insbesondere hinterlegten, Forstbegriff. b) Erfassen, insbesondere automatisches Erfassen, einer Position des Baums und/oder der Umgebung mit der Spracheingabe. c) Erkennen, insbesondere automatisches Erkennen, des Forstbegriffs in der erfassten Spracheingabe. d) Zuordnen, insbesondere automatisches Zuordnen, der Information in der erfassten Spracheneingabe einer, insbesondere nur einer einzigen, von mindestens zwei, insbesondere hinterlegten, Informationskategorien basierend auf dem erkannten Forstbegriff. e) Speichern, insbesondere automatisches Speichern, der kategorisierten Information mit der erfassten Position.

Das Verfahren ermöglicht ein einfaches Dokumentieren. Insbesondere ermöglicht das Erfassen der Spracheingabe, dass ein Benutzer, insbesondere ein Forstarbeiter, seine Hände nicht zum Eingeben der Information braucht. Der Benutzer kann seine Hände für anderes frei haben. Somit ist das Verfahren benutzerfreundlich. Des Weiteren ermöglicht das Verfahren, dass das Dokumentierte, insbesondere die kategorisierte Information mit der erfassten Position, einfach genutzt werden kann, insbesondere für eine Arbeitsplanung bezüglich des Baums und/oder seiner Umgebung oder für eine Zertifizierung des Baums und/oder seiner Umgebung.

Insbesondere kann das Dokumentieren ein Auszeichnen des mindestens einen Baums aufweisen oder sein.

Der Baum kann stehend sein, insbesondere lebend. Die Umgebung sich in einem Umkreis von maximal 500 Meter (m) Entfernung von dem Baum erstrecken, insbesondere von maximal 200 m, insbesondere von maximal 100 m, insbesondere von maximal 50 m, insbesondere von maximal 20 m. Der Baum kann ein Baum eines Forsts oder eines Walds sein. Alternativ kann der Baum ein Baum eines Gartens, eines Parks, einer Allee oder etwas anderen sein.

Unabhängig davon kann zum Dokumentieren für den Baum und/oder die Umgebung des Baums der mindestens eine Forstbegriff verwendet werden. Der Forstbegriff kann als Forstschlüsselbegriff oder Forstwirtschaftsbegriff bezeichnet werden. Der Forstbegriff selbst kann die Information sein. Die Information kann als Forstinformation bezeichnet werden. Die Information kann einen Wert und/oder einen Betrag aufweisen oder sein.

Die Spracheingabe kann mehrere Informationen mit mehreren zugehörigen Forstbegriffen aufweisen. Jede der mehreren Informationen kann basierend auf dem zugehörigen Forstbegriff der entsprechenden Informationskategorie zugeordnet werden. Beispielsweise kann eine erste Information einer ersten Informationskategorie zugeordnet werden und eine zweite, von der ersten verschiedene Information kann einer zweiten, von der ersten verschiedenen Informationskategorie zugeordnet werden. Die Spracheingabe kann von dem Benutzer gesprochen werden oder sein.

Die Position kann Koordinaten beziehungsweise einen Wert und/oder einen Betrag der Koordinaten aufweisen oder sein. Insbesondere kann die Position eine Position des Benutzers an dem Baum und/oder in der Umgebung sein.

Insbesondere kann die Spracheingabe die Position aufweisen. In anderen Worten: der Benutzer kann die Position sprechen, wobei die gesprochene Position erfasst werden kann. Zuvor kann eine Positionsbestimmungseinrichtung die Position an den Benutzer ausgegeben haben.

Zusätzlich oder alternativ kann die Position getrennt von der Spracheingabe erfasst werden. Anders formuliert: die Spracheingabe braucht nicht die Position aufzuweisen. Insbesondere kann das Erfassen der Position ein Bestimmen, insbesondere ein automatisches Bestimmen, der Position aufweisen oder sein, insbesondere mittels einer mobilen Positionsbestimmungseinrichtung. Das Erfassen der Spracheingabe und das Erfassen der Position kann miteinander zeitnah oder zeitsynchronisiert, insbesondere zeitgleich oder währenddessen, ausgeführt werden. Zeitnah kann bedeuten, dass das Erfassen der Position in einem Zeitraum von maximal 30 Sekunden (s), insbesondere von maximal 10 s, insbesondere von maximal 5 s, insbesondere von maximal 1 s, vor bis nach dem Erfassen der Spracheingabe ausgeführt werden kann. Zeitgleich kann bedeuten, dass das Erfassen der Position zu Beginn, in der Mitte oder zu Ende des Erfassens der Spracheingabe ausgeführt werden kann.

Der Schritt c) kann zeitgleich mit dem Schritt a) und/oder dem Schritt b) und/oder zeitlich nach diesen/m ausgeführt werden. Der Schritt d) kann zeitgleich mit dem Schritt c) und/oder zeitlich nach diesem ausgeführt werden. Der Schritt e) kann zeitgleich mit dem Schritt d) und/oder zeitlich nach diesem ausgeführt werden.

Das Verfahren kann für mindestens einen weiteren Baum und/oder eine weitere Umgebung des weiteren Baums, insbesondere mehrfach, wiederholt werden.

In einer Weiterbildung der Erfindung weist das Verfahren den Schritt auf: Messen mindestens einer Geometrie, insbesondere eines Werts und/oder eines Betrags der Geometrie, des Baums und/oder der Umgebung, insbesondere mittels eines handgeführten Messgeräts. Die Information weist die gemessene Geometrie auf. Der Forstbegriff ist ein geometrischer Forstbegriff beziehungsweise ein Forstbegriff für die Geometrie. Mindestens eine der Informationskategorien ist eine geometrische Informationskategorie. Die Spracheingabe kann ermöglichen, dass der Benutzer seine Hände zum Messen frei hat, insbesondere für das handgeführte Messgerät, soweit vorhanden. Insbesondere kann die Geometrie des Baums einen Durchmesser, insbesondere einen Brusthöhendurchmesser, und/oder eine Höhe und/oder eine Krümmung und/oder eine Neigung und/oder eine Kontur und/oder eine Form und/oder eine Astverteilung und/oder eine Kronenlast des Baums oder seines Baumstamms aufweisen oder sein. Zusätzlich oder alternativ zum Messen kann mindestens ein Teil der Geometrie, wie die Höhe, insbesondere von dem Benutzer, geschätzt oder sogar gezählt werden. Die Forstinformation kann die geschätzte oder gezählte Geometrie aufweisen.

In einer Weiterbildung der Erfindung weist die Information eine Fällinformation, insbesondere über ein Fällwerkzeug, zum Fällen des Baums auf. Der Forstbegriff ist ein Forstbegriff für die Fällinformation, insbesondere das Fällwerkzeug. Mindestens eine der Informationskategorien ist eine Fäll-Informationskategorie, insbesondere eine Fällwerkzeug-Informationskategorie. Das Fällwerkzeug kann ein Spezial-Fällwerkzeug sein, dass nicht zur Standardausrüstung eines Forstwirts zu gehören braucht, welche er typischerweise immer dabei haben kann, wie eine Axt, eine Säge und/oder Keile. Insbesondere kann das Spezial-Fällwerkzeug eine Seilwinde mit Seil zum seilunterstützten Fällen des Baums sein.

In einer Weiterbildung der Erfindung weist die Information eine Baumart des Baums auf. Der Forstbegriff ist ein Forstbegriff für die Baumart. Mindestens eine der Informationskategorien ist eine Baumart-Informationskategorie. Insbesondere kann die Baumart Buche, Lärche, Eiche, Fichte oder Kiefer sein. Zusätzlich oder alternativ kann die Baumart Zukunftsbaum beziehungsweise Z-Baum, Samenbaum, Habitatbaum, Höhlenbaum, Horstbaum, Käferbaum, Mahlbaum, Erntebaum, Totholz oder Gassenbaum sein. Ein Gassenbaum kann ein Baum sein, welcher zum Anlegen einer zukünftigen Rückegasse gefällt werden soll.

In einer Weiterbildung der Erfindung weist die Information eine Qualität und/oder einen Gesundheitszustand des Baums auf. Der Forstbegriff ist ein Forstbegriff für die Qualität und/oder den Gesundheitszustand. Mindestens eine der Informationskategorien ist eine Qualitäts-Informationskategorie und/oder eine Gesundheitszustands-Informationskategorie. Insbesondere kann die Qualität eine Qualitätsklasse wie A, B, C oder 1, 2, 3 oder Furnier oder Wertholz sein. Der Gesundheitszustand kann Schäden, insbesondere Holzschäden und/oder einen Schädlingsbefall, und/oder eine Fäule aufweisen oder durch diese beeinträchtigt beziehungsweise verschlechtert sein.

In einer Weiterbildung der Erfindung weist die Information ein Gefahren- und/oder Hindernisobjekt und/oder eine Rückegasse der Umgebung auf. Der Forstbegriff ist ein Forstbegriff für das Gefahren- und/oder Hindernisobjekt und/oder die Rückegasse. Mindestens eine der Informationskategorien ist eine Gefahren- und/oder Hindernis-Informationskategorie und/oder eine Rückegassen-Informationskategorie. Insbesondere kann das Gefahren- und/oder Hindernisobjekt einen Hochsitz beziehungsweise ein Drückjagdbock oder ein Biotop aufweisen oder sein. Die Rückegasse kann zum Holen des, insbesondere gefällten, Baums dienen.

In einer Weiterbildung der Erfindung weist das Verfahren die Schritte auf: Einteilen, insbesondere automatisches Einteilen, des Baums und/oder der Umgebung in eine, insbesondere nur in eine einzige, von mindestens zwei, insbesondere hinterlegten, Gruppen der Informationskategorie basierend auf der kategorisierten Information. Anzeigen, insbesondere automatisches Anzeigen, der erfassten Position in oder auf einer, insbesondere digitalen, Karte mit der Gruppeneinteilung. Die Gruppe kann durch ein spezifisches Gruppenkriterium gekennzeichnet sein. Beispielsweise kann das Einteilen basierend auf dem Erfordernis oder dem Nicht-Erfordernis eines Spezial-Fällwerkzeugs erfolgen. Zusätzlich oder alternativ kann das Einteilen basierend auf der kategorisierten Information einer speziellen Baumart, wie Gassenbaum, erfolgen. Weiter zusätzlich oder alternativ kann das Einteilen basierend auf der kategorisierten Information einer speziellen Qualität und/oder eines speziellen Gesundheitszustands erfolgen. Weiter zusätzlich oder alternativ kann das Einteilen basierend auf der kategorisierten Information eines speziellen Gefahren- und/oder Hindernisobjekts erfolgen. Weiter zusätzlich oder alternativ kann das Einteilen basierend auf dem Erfüllen oder Nicht-Erfüllen Rückegasse erfolgen.

In einer Weiterbildung der Erfindung weist das Verfahren die Schritte auf: Einteilen, insbesondere automatisches Einteilen, des Baums und/oder der Umgebung in eine, insbesondere nur in eine einzige, von mindestens zwei, insbesondere hinterlegten, Gruppen der Informationskategorie basierend auf der kategorisierten Information. Auswählen, insbesondere automatisches Auswählen, einer der Gruppen. Ausgeben, insbesondere automatisches Ausgeben, einer Routenführung zu der, insbesondere mindestens einen, erfassten Position der ausgewählten Gruppe. Die Gruppe kann durch ein spezifisches Gruppenkriterium gekennzeichnet sein. Beispielsweise kann das Einteilen basierend auf dem Erfordernis oder dem Nicht-Erfordernis eines Spezial-Fällwerkzeugs erfolgen. Zusätzlich oder alternativ kann das Einteilen basierend auf der kategorisierten Information einer speziellen Baumart, wie Gassenbaum, erfolgen. Weiter zusätzlich oder alternativ kann das Einteilen basierend auf der kategorisierten Information einer speziellen Qualität und/oder eines speziellen Gesundheitszustands erfolgen. Weiter zusätzlich oder alternativ kann das Einteilen basierend auf der kategorisierten Information eines speziellen Gefahren- und/oder Hindernisobjekts erfolgen. Weiter zusätzlich oder alternativ kann das Einteilen basierend auf dem Erfüllen oder Nicht-Erfüllen Rückegasse erfolgen. Zusätzlich kann die kategorisierte Information und/oder das Gruppenkriterium, soweit vorhanden, ausgegeben werden. Die Routenführung kann optisch, akustisch und/oder haptisch ausgegeben werden. Insbesondere kann das optische Ausgeben ein Anzeigen aufweisen. Das haptische Ausgeben kann ein Vibrieren aufweisen.

Des Weiteren bezieht sich die Erfindung auf ein Dokumentationssystem zum Dokumentieren der mindestens einen Information über den mindestens einen Baum und/oder die Umgebung des Baums. Das Dokumentationssystem kann insbesondere zum Ausführen des zuvor beschriebenen Verfahrens ausgebildet sein. Das erfindungsgemäße Dokumentationssystem weist eine mobile, insbesondere elektrische, Erfassungseinrichtung, eine mobile, insbesondere elektrische, Positionserfassungseinrichtung, eine, insbesondere elektrische, Erkennungseinrichtung, eine, insbesondere elektrische, Zuordnungseinrichtung und eine, insbesondere elektrische, Speichereinrichtung auf. Die mobile Erfassungseinrichtung ist zum Erfassen der Spracheingabe aufweisend die mindestens eine Information über den Baum und/oder die Umgebung des Baums mit dem mindestens einen Forstbegriff ausgebildet. Die mobile Positionserfassungseinrichtung ist zum Erfassen der Position des Baums und/oder der Umgebung mit der Spracheingabe ausgebildet. Die Erkennungseinrichtung ist zum Erkennen des Forstbegriffs in der erfassten Spracheingabe ausgebildet. Die Zuordnungseinrichtung ist zum Zuordnen der Information in der erfassten Spracheneingabe einer von den mindestens zwei Informationskategorien basierend auf dem erkannten Forstbegriff ausgebildet. Die Speichereinrichtung ist zum Speichern der kategorisierten Information mit der erfassten Position ausgebildet.

Das Dokumentationssystem kann die gleichen Vorteile ermöglichen wie das zuvor beschriebene Verfahren.

Mobil kann als portabel oder handgeführt, insbesondere handgetragen, bezeichnet werden.

Die mobile Erfassungseinrichtung kann ein Mikrophon aufweisen. Insbesondere kann das Dokumentationssystem ein Headset, insbesondere ein Bluetooth-Headset, mit dem Mikrophon aufweisen.

Die mobile Erfassungseinrichtung und die mobile Positionserfassungseinrichtung können dieselbe Einrichtung sein, insbesondere zum Erfassen der Spracheingabe aufweisend die Position. Zusätzlich oder alternativ kann die mobile Positionserfassungseinrichtung getrennt von der mobilen Erfassungseinrichtung ausgebildet sein, insbesondere zum Erfassen der Position getrennt von der Spracheingabe. Die mobile Erfassungseinrichtung und/oder die mobile Positionserfassungseinrichtung können/kann dazu ausgebildet sein oder miteinander derart zusammen wirken beziehungsweise derart gekoppelt sein, das Erfassen der Spracheingabe und das Erfassen der Position miteinander zeitnah oder zeitsynchronisiert auszuführen. Insbesondere kann die Positionserfassungseinrichtung die mobile Positionsbestimmungseinrichtung zum Bestimmen der Position aufweisen oder sein. Die mobile Positionsbestimmungseinrichtung kann einen Satelliten-Positionsbestimmungsempfänger aufweisen oder sein. Der Satelliten-Positionsbestimmungsempfänger kann für eines oder mehrere Satelliten-Positionsbestimmungssysteme wie NAVSTAR GPS, GLONASS, Galileo und/oder BeiDou ausgebildet sein.

Die Erkennungseinrichtung und/oder die Zuordnungseinrichtung können/kann einen Prozessor, insbesondere eine CPU, aufweisen oder sein.

Die Speichereinrichtung kann eine Festplatte und/oder ein Wechselspeichermedium aufweisen oder sein. Zusätzlich kann die Speichereinrichtung eine elektronische Speichereinrichtung, insbesondere eine Halbleiterspeichereinrichtung, und/oder eine magnetische Speichereinrichtung und/oder eine optische Speichereinrichtung aufweisen oder sein.

In einer Weiterbildung der Erfindung weist das Dokumentationssystem das handgeführte, insbesondere handgetragene, Messgerät auf. Das Messgerät ist zum Messen der mindestens einen Geometrie des Baums und/oder der Umgebung ausgebildet. Die Information weist die gemessene Geometrie auf. Der Forstbegriff ist der geometrische Forstbegriff. Mindestens eine der Informationskategorien ist die geometrische Informationskategorie. Handgeführtes, insbesondere handgetragenes, Messgerät kann bedeuten, dass das Messgerät eine maximale Masse von 50 Kilogramm (kg), insbesondere von 20 kg, insbesondere von 10 kg, aufweisen kann.

In einer Ausgestaltung der Erfindung ist das handgeführte Messgerät eine Kluppe. Die Kluppe ist zum Messen eines Durchmessers des Baums ausgebildet. Die Information weist den gemessenen Durchmesser auf. Der Forstbegriff ist ein Forstbegriff für den Durchmesser. Die Informationskategorie ist eine Durchmesser-Informationskategorie.

In einer Weiterbildung der Erfindung weist das Dokumentationssystem ein mobiles benutzerbetätigbares, insbesondere elektrisches, Auslöserelement auf. Das Auslöserelement ist zur, insbesondere lösbaren, Befestigung an einem mobilen Gerät ausgebildet, insbesondere an dem handgeführten Messgerät, soweit vorhanden. Das Auslöserelement ist zur kabellosen Verbindung mit der mobilen Erfassungseinrichtung zum Auslösen des Erfassens der Spracheingabe und/oder mit der mobilen Positionserfassungseinrichtung zum Auslösen des Erfassens der Position ausgebildet. Insbesondere kann das mobile benutzerbetätigbare Auslöserelement getrennt von der mobilen Erfassungseinrichtung und/oder der mobilen Positionserfassungseinrichtung ausgebildet sein. Das mobile benutzerbetätigbare Auslöserelement kann einen Taster beziehungsweise einen Druckknopf aufweisen oder sein. Die kabellose Verbindung kann eine Bluetooth- und/oder eine WLAN-Verbindung sein. Zusätzlich oder alternativ kann das Dokumentationssystem beziehungsweise seine mobile Erfassungseinrichtung zur Sprachsteuerung ausgebildet sein, insbesondere zum Auslösen des Erfassens der Spracheingabe und/oder des Erfassens der Position in Abhängigkeit von einem Sprachbefehl.

In einer Weiterbildung der Erfindung weist das Dokumentationssystem ein Smartphone auf. Die mobile Positionserfassungseinrichtung ist getrennt von dem Smartphone ausgebildet. Zusätzlich oder alternativ weist das Dokumentationssystem einen Tabletcomputer auf. Die mobile Positionserfassungseinrichtung ist getrennt von dem Tabletcomputer ausgebildet. Typischerweise können/kann das Smartphone und/oder der Tabletcomputer selbst eine integrierte Positionserfassungseinrichtung, insbesondere einen integrierten Satelliten-Positionsbestimmungsempfänger, aufweisen, welche in der Regel relativ ungenau in der Position sein kann oder ist. Die getrennte Ausbildung kann eine genauere Positionserfassung, insbesondere Positionsbestimmung, ermöglichen. Die mobile Positionserfassungseinrichtung kann als GPS-Verstärker bezeichnet werden. Die mobile Positionserfassungseinrichtung kann zur, insbesondere lösbaren, Verbindung oder Kopplung mit dem Smartphone und/oder dem Tabletcomputer ausgebildet sein.

In einer Weiterbildung der Erfindung weist das Dokumentationssystem eine mobile, insbesondere elektrische, Zwischenspeichereinrichtung auf. Die mobile Zwischenspeichereinrichtung ist zum Zwischenspeichern der erfassten Spracheingabe und/oder der erfassten Position ausgebildet. Die mobile Zwischenspeichereinrichtung ist zur Übertragung der zwischengespeicherten Spracheingabe an die Erkennungseinrichtung und/oder der zwischengespeicherten Position an die Speichereinrichtung ausgebildet. Insbesondere kann die mobile Zwischenspeichereinrichtung getrennt von der Erkennungseinrichtung, der Zuordnungseinrichtung und/oder der Speichereinrichtung ausgebildet sein. Die mobile Zwischenspeichereinrichtung und zusätzlich die Erkennungseinrichtung, die Zuordnungseinrichtung und/oder die Speichereinrichtung können jeweils eine Übertragungseinrichtung zur Übertragung aufweisen. Die Übertragung kann eine UMTS-, WLAN-, und/oder Bluetooth-Übertragung sein. Das Dokumentationssystem kann ein Smartphone und/oder einen Tabletcomputer aufweisen, welches/r die Zwischenspeichereinrichtung aufweisen kann. Die Zwischenspeichereinrichtung kann eine Festplatte und/oder ein Wechselspeichermedium aufweisen oder sein. Zusätzlich kann die Zwischenspeichereinrichtung eine elektronische Speichereinrichtung, insbesondere eine Halbleiterspeichereinrichtung, und/oder eine magnetische Speichereinrichtung und/oder eine optische Speichereinrichtung aufweisen oder sein.

In einer Weiterbildung der Erfindung weist das Dokumentationssystem eine, insbesondere elektrische, Ausgabeeinrichtung auf. Die Ausgabeeinrichtung ist zum Ausgeben, insbesondere zum Anzeigen, der kategorisierten Information mit der erfassten Position ausgebildet. Insbesondere kann die Ausgabeeinrichtung eine Anzeige und/oder einen Schallerzeuger und/oder eine Vibrationseinrichtung aufweisen oder sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein Ablaufdiagramm eines erfindungsgemäßen Verfahrens,
- Fig. 2: ein erfindungsgemäßes Dokumentationssystem,
- Fig. 3: einen Baum und eine Umgebung des Baums beim Dokumentieren mittels des Verfahrens der Fig. 1 und des Dokumentationssystems der Fig. 2,
- Fig. 4: eine Tabelle mit mindestens einer kategorisierten Information und mindestens einer erfassten Position und
- Fig. 5: eine Karte mit einer erfassten Position und einer Gruppeneinteilung.

### DETAILLIERTE BESCHREIBUNG DER AUSFÜHRUNGSBEISPIELE

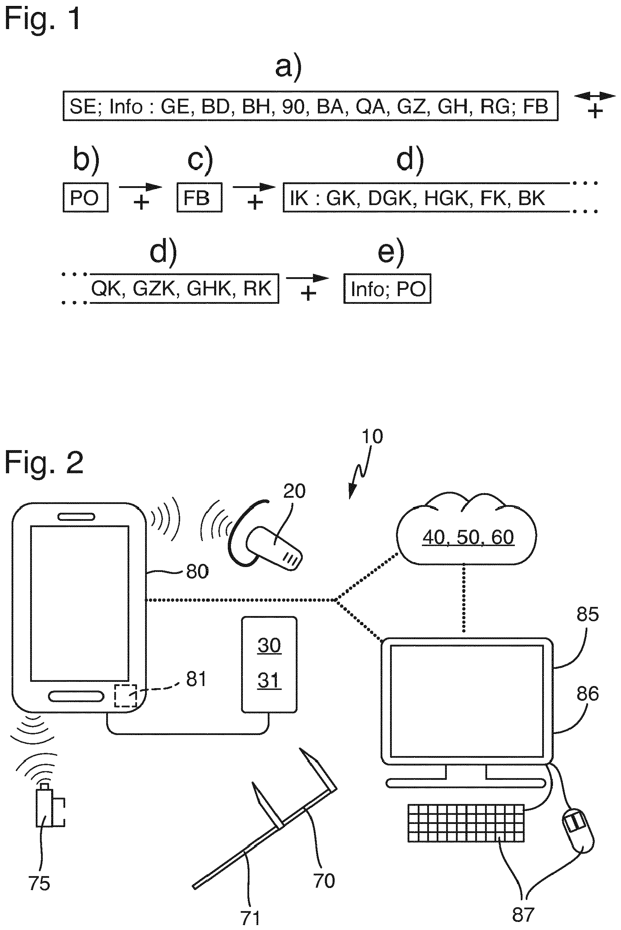

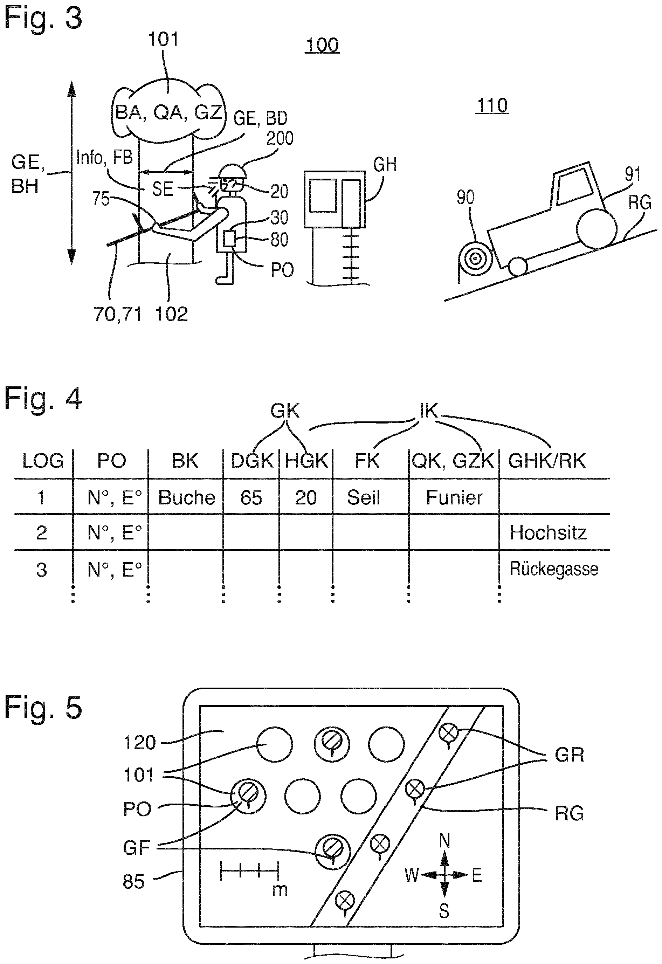

Fig. 1 zeigt ein erfindungsgemäßes Verfahren zum Dokumentieren mindestens einer Information Info über mindestens einen Baum 101 und/oder eine Umgebung 110 des Baums 101, insbesondere eines Forsts 100, wie in Fig. 3 zu erkennen. Das Verfahren weist die Schritte auf: a) Erfassen einer Spracheingabe SE aufweisend die mindestens eine Information Info über den Baum 101 und/oder die Umgebung 110 des Baums 101 mit mindestens einem Forstbegriff FB. b) Erfassen einer Position PO des Baums 101 und/oder der Umgebung 110 mit der Spracheingabe SE. c) Erkennen des Forstbegriffs FB in der erfassten Spracheingabe SE. d) Zuordnen der Information Info in der erfassten Spracheneingabe SE einer von mindestens zwei Informationskategorien IK basierend auf dem erkannten Forstbegriff FB. e) Speichern der kategorisierten Information Info mit der erfassten Position PO.

Fig. 2 zeigt ein erfindungsgemäßes Dokumentationssystem 10 zum Dokumentieren der mindestens einen Information Info über den mindestens einen Baum 101 und/oder die Umgebung 110 des Baums 101. Das Dokumentationssystem 10 ist insbesondere zum Ausführen des zuvor beschriebenen Verfahrens ausgebildet. Das Dokumentationssystem 10 weist eine mobile Erfassungseinrichtung 20, eine mobile Positionserfassungseinrichtung 30, eine Erkennungseinrichtung 40, eine Zuordnungseinrichtung 50 und eine Speichereinrichtung 60 auf. Die mobile Erfassungseinrichtung 20 ist zum Erfassen der Spracheingabe SE aufweisend die mindestens eine Information Info über den Baum 101 und/oder die Umgebung 110 des Baums 101 mit dem mindestens einen Forstbegriff FB ausgebildet. Die mobile Positionserfassungseinrichtung 30 ist zum Erfassen der Position PO des Baums 101 und/oder der Umgebung 110 mit der Spracheingabe SE ausgebildet. Die Erkennungseinrichtung 40 ist zum Erkennen des Forstbegriffs FB in der erfassten Spracheingabe SE ausgebildet. Die Zuordnungseinrichtung 50 ist zum Zuordnen der Information Info in der erfassten Spracheneingabe SE einer von den mindestens zwei Informationskategorien IK basierend auf dem erkannten Forstbegriff FB ausgebildet. Die Speichereinrichtung 60 ist zum Speichern der kategorisierten Information Info mit der erfassten Position PO ausgebildet.

Im gezeigten Ausführungsbeispiel ist die mobile Positionserfassungseinrichtung 30 getrennt von der mobilen Erfassungseinrichtung 20 ausgebildet. Die mobile Positionserfassungseinrichtung 30 ist eine mobile Positionsbestimmungseinrichtung in Form eines Satelliten-Positionsbestimmungsempfängers 31 zum Bestimmen der Position PO. Das Erfassen der Position PO ist ein Bestimmen der Position, insbesondere mittels der mobilen Positionsbestimmungseinrichtung 30.

In alternativen Ausführungsbeispielen kann die Spracheingabe die Position aufweisen. Die mobile Erfassungseinrichtung und die mobile Positionserfassungseinrichtung können dieselbe Einrichtung sein, insbesondere zum Erfassen der Spracheingabe aufweisend die Position.

Im Detail weist das Dokumentationssystem 10 ein Smartphone 80 auf. In alternativen Ausführungsbeispielen kann das Dokumentationssystem zusätzlich oder alternativ einen Tabletcomputer aufweisen. Die mobile Positionserfassungseinrichtung 30 ist getrennt von dem Smartphone 80 ausgebildet. Die mobile Positionserfassungseinrichtung 30 ist zur, insbesondere lösbaren, Verbindung mit dem Smartphone 80 ausgebildet, beispielsweise mittels einer Mikro-USB-Schnittstelle.

Im gezeigten Ausführungsbeispiel ist die mobile Erfassungseinrichtung 20 ein Bluetooth-Headset mit einem Mikrophon. Die mobile Erfassungseinrichtung 20 und das Smartphone 80 sind zu einer Bluetooth-Verbindung miteinander ausgebildet. In alternativen Ausführungsformen kann ein Mikrophon des Smartphones als mobile Erfassungseinrichtung dienen.

Des Weiteren weist das Dokumentationssystem 10 eine mobile Zwischenspeichereinrichtung 81 auf. Im gezeigten Ausführungsbeispiel weist das Smartphone 80 die mobile Zwischenspeichereinrichtung 81 auf. Die mobile Zwischenspeichereinrichtung 81 ist zum Zwischenspeichern der erfassten Spracheingabe SE und der erfassten Position PO ausgebildet. Die mobile Zwischenspeichereinrichtung 81 ist zur Übertragung der zwischengespeicherten Spracheingabe SE an die Erkennungseinrichtung 40 und der zwischengespeicherten Position PO an die Speichereinrichtung 60 ausgebildet.

Außerdem weist das Dokumentationssystem 10 ein mobiles benutzerbetätigbares Auslöserelement 75 in Form eines Tasters auf. Das Auslöserelement 75 ist zur, insbesondere lösbaren, Befestigung an einem mobilen Gerät 70, 71 ausgebildet. Das Auslöserelement 75 ist zur kabellosen Verbindung mit der mobilen Erfassungseinrichtung 20 zum Auslösen des Erfassens der Spracheingabe SE und mit der mobilen Positionserfassungseinrichtung 30 zum Auslösen des Erfassens der Position PO ausgebildet.

Im Detail sind das mobile benutzerbetätigbare Auslöserelement 75 und das Smartphone 80 zu einer Bluetooth-Verbindung miteinander ausgebildet. Bei einem Betätigen des Auslöserelements 75 wird mittels des Smartphones 80 oder über dieses das Erfassen der Spracheingabe SE und das Erfassen der Position PO ausgelöst. Somit wird das Erfassen der Spracheingabe SE und das Erfassen der Position PO miteinander zeitnah ausgeführt.

Insbesondere wird mit dem Betätigen des Auslöserelements 75 die Position PO bestimmt. Gleichzeitig wird mit dem Erfassen der Spracheingabe SE begonnen. Das Erfassen der Spracheingabe SE wird durch ein erneutes Betätigen des Auslöserelements 75 beendet. Zusätzlich oder alternativ kann das Erfassen der Spracheingabe, insbesondere automatisch, beendet werden, nach einem bestimmten Zeitraum ohne Spracheingabe, beispielsweise nach zehn Sekunden (s), insbesondere nach fünf s, insbesondere nach zwei s.

In alternativen Ausführungsbeispielen kann das Dokumentationssystem beziehungsweise seine mobile Erfassungseinrichtung zusätzlich oder alternativ zur Sprachsteuerung ausgebildet sein, insbesondere zum Auslösen des Erfassens der Spracheingabe und/oder des Erfassens der Position in Abhängigkeit von einem Sprachbefehl.

Weiter weist das Dokumentationssystem 10 eine Ausgabeeinrichtung 85 in Form eines in einen Desktopcomputer 86 integrierten Bildschirms auf. Die Ausgabeeinrichtung 85 ist zum Ausgeben, insbesondere zum Anzeigen, der kategorisierten Information Info mit der erfassten Position PO ausgebildet, wie in Fig. 4 und 5 zu erkennen. Zusätzlich weist das Dokumentationssystem 10 ein benutzerbetätigbares Bedienelement 87 in Form einer Computertastatur und einer Computermaus zum Bedienen der Ausgabeeinrichtung 85 beziehungsweise des Desktopcomputers 86 auf.

Im gezeigten Ausführungsbeispiel sind die Erkennungseinrichtung 40, die Zuordnungseinrichtung 50 und die Speichereinrichtung 60 als mindestens ein Server beziehungsweise ein Netzwerk ausgebildet, insbesondere einer Cloud. In alternativen Ausführungsbeispielen können/kann das Smartphone, der Tabletcomputer, soweit vorhanden, und/oder der Desktopcomputer zusätzlich oder alternativ die Erkennungseinrichtung, die Zuordnungseinrichtung und/oder die Speichereinrichtung aufweisen.

Das Smartphone 80 beziehungsweise seine mobile Zwischenspeichereinrichtung 81 und der Desktopcomputer 86 sind zur Übertragung der zwischengespeicherten Spracheingabe SE und der zwischengespeicherten Position PO und der kategorisierten Information Info mit der erfassten Position PO miteinander ausgebildet, insbesondere mittels WLAN-, und/oder Bluetooth-Übertragung. Der Desktopcomputer 86 und die Erkennungseinrichtung 40, die Zuordnungseinrichtung 50 und die Speichereinrichtung 60 sind zur Übertragung der Spracheingabe SE und der Position PO und der kategorisierten Information Info mit der erfassten Position PO ausgebildet, insbesondere mittels Internet-Übertragung. Zusätzlich sind das Smartphone 80 beziehungsweise seine mobile Zwischenspeichereinrichtung 81 und die Erkennungseinrichtung 40, die Zuordnungseinrichtung 50 und die Speichereinrichtung 60 zur Übertragung der Spracheingabe SE und der Position PO und der kategorisierten Information Info mit der erfassten Position PO ausgebildet, insbesondere mittels UMTS-Übertragung.

In der Erkennungseinrichtung 40 und zusätzlich in der Zuordnungseinrichtung 50 ist der mindestens eine Forstbegriff FB hinterlegt. In der Zuordnungseinrichtung 50 sind die mindestens zwei Informationskategorien IK hinterlegt. Mittels des Smartphones 80, des Tabletcomputers, soweit vorhanden, und /oder des Desktopcomputers 86 beziehungsweise des benutzerbetätigbaren Bedienelements 87 kann mindestens ein weiterer Forstbegriff FB und/oder mindestens eine weiter Informationskategorie angelegt beziehungsweise hinterlegt oder editiert werden, insbesondere durch einen Benutzer 200.

Zudem weist das Dokumentationssystem ein handgeführtes, insbesondere handgetragenes, Messgerät 70 auf. Das Messgerät 70 ist zum Messen mindestens einer Geometrie GE, BD des Baums 101 ausgebildet, insbesondere durch den Benutzer 200, wie in Fig. 3 zu erkennen. In alternativen Ausführungsbeispielen kann das Messgerät zusätzlich oder alternativ zum Messen mindestens einer Geometrie der Umgebung ausgebildet sein. Die Information Info weist die gemessene Geometrie GE, BD auf. Der Forstbegriff FB ist ein geometrischer Forstbegriff GB. Mindestens eine der Informationskategorien IK ist eine geometrische Informationskategorie GK.

Im Detail ist das handgeführte Messgerät 70 eine Kluppe 71. Die Kluppe 71 ist zum Messen eines Durchmessers BD des Baums 101 beziehungsweise seines Baumstamms 102 ausgebildet. Die Information Info weist den gemessenen Durchmesser BD auf. Der Forstbegriff FB, GB ist ein Forstbegriff für den Durchmesser BD, beispielsweise Durchmesser, Baumdurchmesser oder Brusthöhendurchmesser beziehungsweise jeweils eine Abkürzung dafür. Die Informationskategorie IK, GK ist eine Durchmesser-Informationskategorie DGK.

Im gezeigten Ausführungsbeispiel ist das mobile benutzerbetätigbare Auslöserelement 75 an dem handgeführten Messgerät 70 in Form der Kluppe 71 befestigt. In alternativen Ausführungsbeispielen kann das mobile benutzerbetätigbare Auslöserelement an einem anderen mobilen Gerät befestigt sein, beispielsweise einer Farbspraydose zum Markieren des Baums und/oder der Umgebung.

Das Verfahren weist den Schritt auf: Messen der mindestens einen Geometrie GE, BD des Baums 101, insbesondere mittels des handgeführten Messgeräts 70. In alternativen Ausführungsbeispielen kann das Verfahren zusätzlich oder alternativ den Schritt aufweisen: messen mindestens einer Geometrie der Umgebung.

Im Detail weist das Verfahren den Schritt auf: Messen des Durchmessers BD des Baums 101 beziehungsweise seines Baumstamms 102, insbesondere mittels der Kluppe 71.

Zusätzlich zum Messen wird mindestens ein Teil der Geometrie GE geschätzt, insbesondere durch den Benutzer 200. Im gezeigten Ausführungsbeispiel wird die Höhe BH des Baums 101 geschätzt. Die Information Info weist die geschätzte Geometrie GE beziehungsweise die Baumhöhe BH auf. Der Forstbegriff ist ein Forstbegriff für die Geometrie GE beziehungsweise die Baumhöhe BH, beispielsweise Höhe oder Baumhöhe beziehungsweise jeweils eine Abkürzung dafür. Mindestens eine der Informationskategorien IK ist eine geometrische Informationskategorie GK beziehungsweise eine Höhen-Informationskategorie HGK.

Des Weiteren weist die Information Info eine Fällinformation, insbesondere über ein Fällwerkzeug 90, zum Fällen des Baums 101 auf. Der Forstbegriff FB ist ein Forstbegriff für die Fällinformation, insbesondere das Fällwerkzeug 90, beispielsweise Seilwinde oder seilunterstütze Fällung beziehungsweise jeweils eine Abkürzung dafür. Mindestens eine der Informationskategorien IK ist eine Fäll-Informationskategorie, insbesondere eine Fällwerkzeug-Informationskategorie FK. Im gezeigten Ausführungsbeispiel ist das Fällwerkzeug 90 in Form der Seilwinde an einem Holfahrzeug 91 in Form eines Traktors angeordnet.

Außerdem weist die Information Info eine Baumart BA des Baums 101 auf. Der Forstbegriff FB ist ein Forstbegriff für die Baumart BA, beispielsweise Gassenbaum, Zukunftsbaum, Buche, Lärche oder Totholz beziehungsweise jeweils eine Abkürzung dafür. Mindestens eine der Informationskategorien IK ist eine Baumart-Informationskategorie BK.

Weiter weist die Information eine Qualität QA und/oder einen Gesundheitszustand GZ des Baums 101 auf. Der Forstbegriff FB ist ein Forstbegriff für die Qualität QA und/oder den Gesundheitszustand GZ, beispielsweise Furnier oder Wertholz und/oder Schäden oder Fäule beziehungsweise jeweils eine Abkürzung dafür. Mindestens eine der Informationskategorien IK ist eine Qualitäts-Informationskategorie QK und/oder eine Gesundheitszustands-Informationskategorie GZK.

Zudem weist die Information Info ein Gefahren- und/oder Hindernisobjekt GH und/oder eine Rückegasse RG der Umgebung 110 auf. Der Forstbegriff FB ist ein Forstbegriff für das Gefahren- und/oder Hindernisobjekt GH und/oder die Rückegasse RG, beispielsweise Hochsitz und/oder Rückegasse beziehungsweise jeweils eine Abkürzung dafür. Mindestens eine der Informationskategorien IK ist eine Gefahren- und/oder Hindernis-Informationskategorie GHK und/oder eine Rückegassen-Informationskategorie RK.

Im gezeigten Ausführungsbeispiel sind mehr als zwei Informationskategorien IK vorhanden, insbesondere sechs, wie in den Spalten der Tabelle der Fig. 4 zu erkennen. Die Informationskategorien IK sind die Baumart-Informationskategorie BK, die Durchmesser-Informationskategorie DGK, die Höhen-Informationskategorie HGK, die Fällwerkzeug-Informationskategorie FK, die Qualitäts- und Gesundheitszustands-Informationskategorie QK/GZK und die Gefahren- und/oder Hindernis- und Rückegassen-Informationskategorie GHK/RK. In alternativen Ausführungsbeispielen kann zusätzlich oder alternativ mindestens eine andere Informationskategorie vorgesehen oder vorhanden sein. Weiter können in alternativen Ausführungsbeispielen zwei, drei, vier, fünf, sieben, acht, neun, zehn oder mehr als zehn Informationskategorien vorgesehen oder vorhanden sein. Zusätzlich weist die Tabelle eine Spalte zur Nummerierung der Spracheingaben SE auf. Weiter zusätzlich weist die Tabelle eine Spalte für die jeweils erfasste Position PO beziehungsweise ihre Koordinaten auf.

Zum Dokumentieren des in Fig. 3 gezeigten Baums 101 geht der Benutzer 200 zu dem Baum 101 mit der mobilen Erfassungseinrichtung 20, der mobilen Positionserfassungseinrichtung 30, dem handgeführten Messgerät 70 in Form der Kluppe 71, dem daran befestigten mobilen benutzerbetätigbaren Auslöserelement 75 und dem Smartphone 80. Dort misst er die mindestens eine Geometrie GE des Baums 101 in Form des Durchmessers BD. Des Weiteren schätzt er die Höhe BH des Baums 101. Außerdem beurteilt er, ob das Fällwerkzeug 90 zum Fällen erforderlich ist, die Baumart BA, die Qualität QA und/oder den Gesundheitszustand GZ. Dabei betätigt er das mobile benutzerbetätigbare Auslöserelement 75 und spricht beispielsweise die Spracheingabe SE: Buche, BHD 65, Höhe 20, seilunterstütze Fällung, Furnier. Dabei kann mit 65 die Einheit Zentimeter und/oder mit 20 die Einheit Meter implizit eingeschlossen sein.

Dann kann das Verfahren für die Umgebung 110 des Baums 101, mindestens einen weiteren Baum 101 und/oder eine weitere Umgebung 110 des weiteren Baums 101 wiederholt werden.

Zum Dokumentieren des Gefahren- und/oder Hindernisobjekts GH in Form des Hochsitzes der Umgebung 110 geht der Benutzer 200 zu dem Gefahren- und/oder Hindernisobjekt GH und spricht dort beispielsweise die weitere Spracheingabe SE: Hochsitz.

Zum Dokumentieren der Rückegasse RG in der Umgebung 110 geht der Benutzer 200 zu der Rückegasse RG, und diese insbesondere entlang, und spricht dort beispielsweise die weitere/n Spracheingabe/n SE: Rückegasse.

Des Weiteren weist das Verfahren die Schritte auf: Einteilen des Baums 101 und/oder der Umgebung 110 in eine von mindestens zwei, insbesondere hinterlegten, Gruppen GF, GR der Informationskategorie IK basierend auf der kategorisierten Information Info. Anzeigen der erfassten Position PO in einer, insbesondere digitalen, Karte 120, wie in Fig. 5 zu erkennen, mit der Gruppeneinteilung, insbesondere mittels des Smartphone 80, des Tabletcomputers, soweit vorhanden, und/oder der Ausgabeeinrichtung 85.

Im gezeigten Ausführungsbeispiel werden die Bäume 101, welche eine seilunterstütze Fällung erfordern, in die Gruppe GF eingeteilt, wie in Fig. 5 durch Schraffur dargestellt. Die anderen Bäume 101 der Fällwerkzeug-Informationskategorie FK werden in eine andere, nicht dargestellte Gruppe eingeteilt. Des Weiteren werden die Rückegassen RG beziehungsweise ihre Zeilen der Tabelle der Fig. 4 mit einem Eintrag Rückegasse in der Rückegassen-Informationskategorie RK in die Gruppe GR eingeteilt, wie in Fig. 5 durch Kreuze dargestellt. In alternativen Ausführungsbeispielen kann zusätzlich oder alternativ in andere Gruppen eingeteilt werden.

Außerdem weist das Verfahren die Schritte auf: das Einteilen des Baums 101 und/oder der Umgebung 110 in die eine von mindestens zwei Gruppen GF, GR der Informationskategorie IK basierend auf der kategorisierten Information Info. Auswählen einer der Gruppen GF insbesondere mittels des Smartphones 80, des Tabletcomputers, soweit vorhanden und/oder des benutzerbetätigbaren Bedienelements 70. Ausgeben einer nicht dargestellten Routenführung zu der, insbesondere mindestens einen, erfassten Position PO der ausgewählten Gruppe GF, insbesondere mittels des Smartphones 80, des Tabletcomputers, soweit vorhanden, und/oder der Ausgabeeinrichtung 85. Beispielsweise kann die Gruppe GF für seilunterstütze Fällung ausgewählt werden. Zusätzlich kann die Information, dass eine seilunterstütze Fällung erforderlich ist, ausgegeben werden.

Wie die gezeigten und oben erläuterten Ausführungsbeispiele deutlich machen, stellt die Erfindung ein vorteilhaftes Verfahren zum Dokumentieren mindestens einer Information über mindestens einen Baum und/oder eine Umgebung des Baums und ein vorteilhaftes Dokumentationssystem zum Dokumentieren mindestens einer Information über mindestens einen Baum und/oder eine Umgebung des Baums bereit, das jeweils das Dokumentieren erleichtert, insbesondere benutzerfreundlich ist, und ein einfaches Nutzen des Dokumentierten ermöglicht.

## Patentansprüche

1. Verfahren zum Dokumentieren mindestens einer Information (Info) über mindestens einen Baum (101) und/oder eine Umgebung (110) des Baums (101), wobei das Verfahren die Schritte aufweist:
a) Erfassen einer Spracheingabe (SE) aufweisend die mindestens eine Information (Info) über den Baum (101) und/oder die Umgebung (110) des Baums (101) mit mindestens einem Forstbegriff (FB),
b) Erfassen einer Position (PO) des Baums (101) und/oder der Umgebung (110) mit der Spracheingabe (SE),
c) Erkennen des Forstbegriffs (FB) in der erfassten Spracheingabe (SE),
d) Zuordnen der Information (Info) in der erfassten Spracheneingabe (SE) einer von mindestens zwei Informationskategorien (IK) basierend auf dem erkannten Forstbegriff (FB) und
e) Speichern der kategorisierten Information (Info) mit der erfassten Position (PO).

2. Verfahren nach Anspruch 1,
- aufweisend den Schritt: Messen mindestens einer Geometrie (GE, BD) des Baums (101) und/oder der Umgebung,
- wobei die Information (Info) die gemessene Geometrie (GE, BD) aufweist,
- wobei der Forstbegriff (FB) ein geometrischer Forstbegriff (GB) ist und
- wobei mindestens eine der Informationskategorien (IK) eine geometrische Informationskategorie (GK) ist.

3. Verfahren nach einem der vorhergehenden Ansprüche,
- wobei die Information (Info) eine Fällinformation, insbesondere über ein Fällwerkzeug (90), zum Fällen des Baums (101) aufweist,
- wobei der Forstbegriff (FB) ein Forstbegriff für die Fällinformation, insbesondere das Fällwerkzeug (90), ist und
- wobei mindestens eine der Informationskategorien (IK) eine Fäll-Informationskategorie, insbesondere eine Fällwerkzeug-Informationskategorie (FK), ist.

4. Verfahren nach einem der vorhergehenden Ansprüche,
- wobei die Information (Info) eine Baumart (BA) des Baums (101) aufweist,
- wobei der Forstbegriff (FB) ein Forstbegriff für die Baumart (BA) ist und
- wobei mindestens eine der Informationskategorien (IK) eine Baumart-Informationskategorie (BK) ist.

5. Verfahren nach einem der vorhergehenden Ansprüche,
- wobei die Information (Info) eine Qualität (QA) und/oder einen Gesundheitszustand (GZ) des Baums (101) aufweist,
- wobei der Forstbegriff (FB) ein Forstbegriff für die Qualität (QA) und/oder den Gesundheitszustand (GZ) ist und
- wobei mindestens eine der Informationskategorien (IK) eine Qualitäts-Informationskategorie (QK) und/oder eine Gesundheitszustands-Informationskategorie (GZK) ist.

6. Verfahren nach einem der vorhergehenden Ansprüche,
- wobei die Information (Info) ein Gefahren- und/oder Hindernisobjekt (GH) und/oder eine Rückegasse (RG) der Umgebung (110) aufweist,
- wobei der Forstbegriff (FB) ein Forstbegriff für das Gefahren- und/oder Hindernisobjekt (GH) und/oder die Rückegasse (RG) ist und
- wobei mindestens eine der Informationskategorien (IK) eine Gefahren- und/oder Hindernis-Informationskategorie (GHK) und/oder eine Rückegassen-Informationskategorie (RK) ist.

7. Verfahren nach einem der vorhergehenden Ansprüche, aufweisend die Schritte:
- Einteilen des Baums (101) und/oder der Umgebung (110) in eine von mindestens zwei Gruppen (GF, GR) der Informationskategorie (IK) basierend auf der kategorisierten Information (Info) und
- Anzeigen der erfassten Position (PO) in einer Karte (120) mit der Gruppeneinteilung.

8. Verfahren nach einem der vorhergehenden Ansprüche, aufweisend die Schritte:
- Einteilen des Baums (101) und/oder der Umgebung (110) in eine von mindestens zwei Gruppen (GF, GR) der Informationskategorie (IK) basierend auf der kategorisierten Information (Info),
- Auswählen einer der Gruppen (GF) und
- Ausgeben einer Routenführung zu der erfassten Position (PO) der ausgewählten Gruppe (GF).

9. Dokumentationssystem (10) zum Dokumentieren mindestens einer Information (Info) über mindestens einen Baum (101) und/oder eine Umgebung (110) des Baums (101), wobei das Dokumentationssystem (10) aufweist:
- ein mobile Erfassungseinrichtung (20), welche zum Erfassen einer Spracheingabe (SE) aufweisend die mindestens eine Information (Info) über den Baum (101) und/oder die Umgebung (110) des Baums (101) mit mindestens einem Forstbegriff (FB) ausgebildet ist,
- eine mobile Positionserfassungseinrichtung (30), welche zum Erfassen einer Position (PO) des Baums (101) und/oder der Umgebung (110) mit der Spracheingabe (SE) ausgebildet ist,
- eine Erkennungseinrichtung (40), welche zum Erkennen des Forstbegriffs (FB) in der erfassten Spracheingabe (SE) ausgebildet ist,
- eine Zuordnungseinrichtung (50), welche zum Zuordnen der Information (Info) in der erfassten Spracheneingabe (SE) einer von mindestens zwei Informationskategorien (IK) basierend auf dem erkannten Forstbegriff (FB) ausgebildet ist, und
- eine Speichereinrichtung (60), welche zum Speichern der kategorisierten Information (Info) mit der erfassten Position (PO) ausgebildet ist.

10. Dokumentationssystem (10) nach Anspruch 9, aufweisend:
- ein handgeführtes Messgerät (70), welches zum Messen mindestens einer Geometrie (GE, BD) des Baums (101) und/oder der Umgebung ausgebildet ist,
- wobei die Information (Info) die gemessene Geometrie (GE, BD) aufweist,
- wobei der Forstbegriff (FB) ein geometrischer Forstbegriff (GB) ist und
- wobei mindestens eine der Informationskategorien (IK) eine geometrische Informationskategorie (GK) ist.

11. Dokumentationssystem (10) nach Anspruch 10,
- wobei das handgeführte Messgerät (70) eine Kluppe (71) ist, welche zum Messen eines Durchmessers (BD) des Baums (101) ausgebildet ist,
- wobei die Information (Info) den gemessenen Durchmesser (BD) aufweist,
- wobei der Forstbegriff (FB, GB) ein Forstbegriff für den Durchmesser (BD) ist und
- wobei die Informationskategorie (IK, GK) eine Durchmesser-Informationskategorie (DGK) ist.

12. Dokumentationssystem (10) nach einem der Ansprüche 9 bis 11, aufweisend:
- ein mobiles benutzerbetätigbares Auslöserelement (75), welches zur Befestigung an einem mobilen Gerät (70, 71) ausgebildet ist und welches zur kabellosen Verbindung mit der mobilen Erfassungseinrichtung (20) zum Auslösen des Erfassens der Spracheingabe (SE) und/oder mit der mobilen Positionserfassungseinrichtung (30) zum Auslösen des Erfassens der Position (PO) ausgebildet ist.

13. Dokumentationssystem (10) nach einem der Ansprüche 9 bis 12, aufweisend:
- ein Smartphone (80), wobei die mobile Positionserfassungseinrichtung (30) getrennt von dem Smartphone (80) ausgebildet ist, und/oder
- einen Tabletcomputer, wobei die mobile Positionserfassungseinrichtung (30) getrennt von dem Tabletcomputer ausgebildet ist.

14. Dokumentationssystem (10) nach einem der Ansprüche 9 bis 13, aufweisend:
- eine mobile Zwischenspeichereinrichtung (81), welche zum Zwischenspeichern der erfassten Spracheingabe (SE) und/oder der erfassten Position (PO) ausgebildet ist und welche zur Übertragung der zwischengespeicherten Spracheingabe (SE) an die Erkennungseinrichtung (40) und/oder der zwischengespeicherten Position (PO) an die Speichereinrichtung (60) ausgebildet ist

15. Dokumentationssystem (10) nach einem der Ansprüche 9 bis 14, aufweisend:
- eine Ausgabeeinrichtung (85), welche zum Ausgeben der kategorisierten Information (Info) mit der erfassten Position (PO) ausgebildet ist.
